(19) Europäisches Patentamt
European Patent Office
Office européen des brevets

(11) Veröffentlichungsnummer: **0 176 899 B1**

# (12) EUROPÄISCHE PATENTSCHRIFT

(45) Veröffentlichungstag der Patentschrift: **03.04.91**

(51) Int. Cl.$^5$: **C09B 67/22**, C08K 5/34, //C09B67/48,C09B5/62

(21) Anmeldenummer: **85111991.7**

(22) Anmeldetag: **21.09.85**

## (54) Mischkristallpigmente auf der Basis von Perylentetracarbonsäurediimiden, Verfahren zu ihrer Herstellung und ihre Verwendung.

(30) Priorität: **03.10.84 DE 3436209**

(43) Veröffentlichungstag der Anmeldung:
**09.04.86 Patentblatt 86/15**

(45) Bekanntmachung des Hinweises auf die Patenterteilung:
**03.04.91 Patentblatt 91/14**

(84) Benannte Vertragsstaaten:
**CH DE FR GB IT LI**

(56) Entgegenhaltungen:
**EP-A- 0 023 191**
**DE-A- 1 810 817**
**DE-A- 2 009 073**
**DE-B- 1 067 157**
**FR-A- 2 327 288**

**DYES AND PIGMENTS, Band 5, Nr. 5, 1984, Seiten 171-188, Elsevier Applied Science Publishers Ltd, Great Yarmouth, GB; Y. NAGAO et al.: "Synthesis and properties of N-alkyl-N'-aryl-3,4:9,10-perylenebis(dicarboximide)"**

**CHEMICAL ABSTRACTS, Band 84, Nr. 24, 4. Juni 1976, Seiten 82-83, Zummenfassung Nr. 166251s, Columbus, Ohio, US; & JP-A-76 07 025 (MITSUBISHI CHEMICAL INDUSTRIES CO., LTD) 21-01-1976**

(73) Patentinhaber: **HOECHST AKTIENGESELLSCHAFT**
**Postfach 80 03 20**
**W-6230 Frankfurt am Main 80(DE)**

(72) Erfinder: **Spietschka, Ernst, Dr.**
**Kirchweg 3**
**W-6270 Idstein Taunus(DE)**
Erfinder: **Tröster, Helmut, Dr.**
**Am Erdbeerstein 44**
**W-6240 Königstein Taunus(DE)**

EP 0 176 899 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services

## Beschreibung

Die vorliegende Erfindung betrifft neue Mischkristallpigmente auf der Basis von Perylentetracarbonsäurediimiden im Kristallgitter der α-Modifikation des Perylentetracarbonsäure-bis-3',5'-dimethylphenylimids, Verfahren zu ihrer Herstellung und ihre Verwendung zum Färben von organischen Polymeren.

Für den Einsatz in hochschmelzenden Kunststoffen sollen Pigmente nicht nur hohe Licht- und Wetterechtheiten aufweisen, sondern auch den bei der Verarbeitung auftretenden Temperaturen ohne Veränderung des Farbeindruoks widerstehen, d.h. auch eine ausreichende thermische Stabilität besitzen. Für dieses Einsatzgebiet besteht als Alternative zu den bislang überwiegend verwendeten Cadmium-Pigmenten in zunehmendem Maße Interesse für organische Farbmittel.

Die Palette an verfügbaren organischen Pigmenten für hochschmelzende synthetische Polymere, insbesondere Polyolefine, ist wegen der hohen Anforderung an die thermische Beständigkeit lückenhaft.

Zur Erzielung klarer Righttöne hat sich seit langem das Perylenpigment der Formel (1)

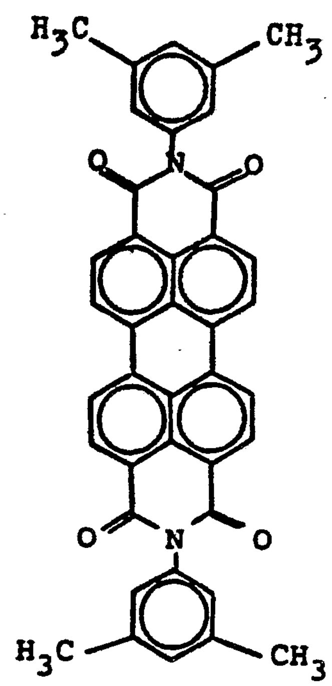

(1)

für das inredestehende Einsatzgebiet als besonders geeignet erwiesen. Diese nach der DE-PS 1 067 157 (US-PS 2 905 685) erhältliche Verbindung, die hierbei in einer in der Japanischen Patentanmeldung J 51007-025 und in der EP-PS 023 191 (US-PS 4 404 385) als α-Modifikation bezeichneten Kristallphase anfällt, ergibt, nach Überführung in eine feinteilige Pigmentform, beispielsweise durch übliche Vermahlung in einer Schwing- oder Rollmühle, eine reine Rotfärbung von hoher Farbstärke und guter thermischer Beständigkeit.

Der vermehrte Einsatz von hochschmelzenden Polymeren wie Polypropylen sowie der Trend zu höheren Produtionsgeschwindigkeiten bei Kunststoffartikeln führten in den letzten Jahren zu einer Verschärfung der Hitzebelastung und damit auch zur Forderung nach einer weiteren Steigerung der Hitzebeständigkeit dieses Pigmentes.

Außerdem wird von vielen Kunststoffverarbeitern seit längerem der Wunsch nach einem deutlich gelberen, farbstarken Rot mit entsprechendem Echtheitsniveau geäußert.

Mit dem seit langem bekannten Perylentetracarbonsäure-bis-4'-ethoxyphenylimid der Formel (3)

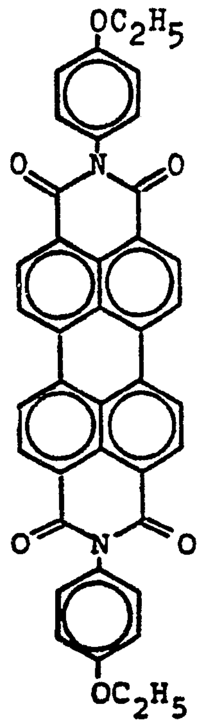

(3)

ist zwar ein solches klares, gelbstichiges Rot verfügbar. Die ungenügende thermische Stabilität dieses Pigments schließt jedoch einen Einsatz in hochschmelzenden Polymeren, in denen es bei den hohen Verarbeitungstemperaturen einen Farbtonumschlag nach blaustichig rot erleidet, aus.

Gegenstand der Erfindung sind neue Perylentetracarbonsäurediimid-Mischkristallpigmente im Kristallgitter der α-Modifikation des Perylentetracarbonsäure-bis-3',5'-dimethylphenylimids der Formel (1), bestehend aus 98 - 70 Molprozent des symmetrischen Diimids der Formel (1) und entsprechend 2 - 30 Molprozent mindestens eines asymmetrischen Diimids der Formel (2), in welcher R ein Wasserstoffatom oder eine Methylgruppe bedeutet

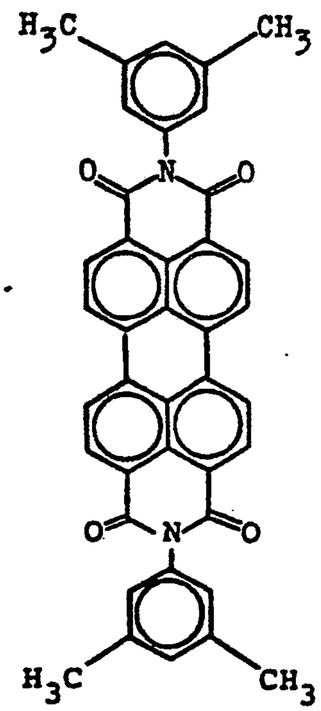

(1)

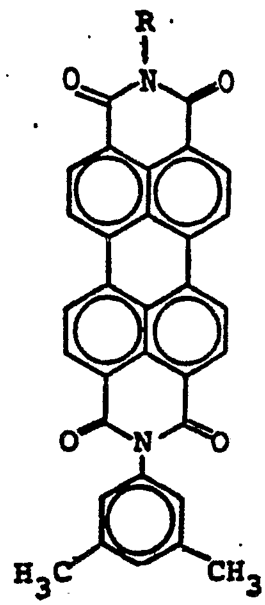

(2)

Verfahren zu ihrer Herstellung, indem man ein Gemisch aus 98-70 Molprozent Perylentetracarbonsäuredianhydrid und entsprechend 2-30 Molprozent mindestens eines Perylentetracarbonsäuremonoanhydrids der Formel (4)

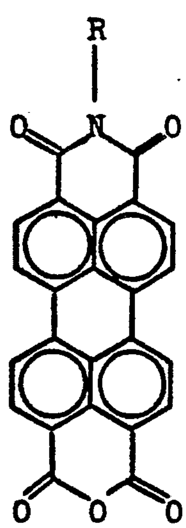

(4)

in welcher R die vorstehend genannte Bedeutung hat, mit der mindestens stöchiometrischen Menge von 3,5-Dimethylanilin in an sich bekannter Weise kondensiert, sowie deren Verwendung zum Färben von organischen Polymeren.

Die so erhältlichen Perylentetracarbonsäurediimid-Mischkristallpigmente ergeben nach Überführung in eine feinteilige Pigmentform nach üblichen Finish-Methoden beispielsweise durch Vermahlen, in hochschmelzenden Polymeren, insbesondere in Polyethylen und Polypropylen, Ausfärbungen, die gegenüber dem reinen Pigment der genannten Formel (1) sowohl den gewünschten gelberen Farbton als auch eine deutlich verbesserte thermische Stabilität aufweisen.

Die neuen Perylentetracarbonsäurediimid-Mischkristallpigmente, die aus der Verbindung der genannten Formel (1) und mindestens einer Komponente der genannten Formel (2) im vorstehend genannten Molverhältnis bestehen, bilden Mischkristalle, die im gleichen Kristallgitter wie die α-Modifikation der Verbindung der genannten Formel (1) kristallisieren.

Im Anhang sind zum Vergleich die Röntgenbeugungsdiagramme des Kristallgitters zweier typischer erfindungsgemäß erhältlicher Mischkristalle (FIGUR 2 und 3) und der α-Modifikation der Verbindung der genannten Formel (1) (FIGUR 1) wiedergegeben. Wie ersichtlich, handelt es sich um übereinstimmende Diagramme, woraus folgt, daß auch die Kristallgitter übereinstimmend sind.

Für die Mischkondensation werden von dem Monoanhydrid oder dem Gemisch von Monoanhydriden der genannten Formel (4) bevorzugt 5-15 Molprozent eingesetzt, so daß infolge der praktisch quantitativen Umsetzung der bevorzugte Anteil der Verbindung bzw. des Komponentengemisches der Formel (2) in der Mischphase der Komponenten der Formeln (1) und (2) dementsprechend ebenfalls zwischen 5 und 15 Molprozent liegt.

Die Ausgangsstoffe der genannten Formel (4) sind bekannt. Sie können beispielsweise nach den Angaben der DE-OS 30 17 185 erhalten werden.

Die Mischkondensationsreaktion kann in bekannter Weise, beispielsweise gemäß den Angaben der DE-PS 1 105 085 (GB-PS 897 707), DE-AS 1 094 897 oder DE-OS 1 807 729 durchgeführt werden, indem man das Gemisch der Reaktanden bei erhöhter Temperatur von etwa 150 - 220° C gegebenenfalls in Gegenwart eines Kondensationsbeschleunigers, wie Zinkchlorid, -carboxylat oder einer Mineralsäure, in einem hochsiedenden Lösungsmittel, wie beispielsweise Di- oder Trichlorbenzol, Nitrobenzol, N-Methylpyrrolidon, Chinolin, Phenolen oder auch im Überschuß von 3,5-Dimethylanilin umsetzt. Die Reaktionsprodukte können in üblicher Weise durch Filtration, gegebenenfalls nach vorherigem Verdünnen mit einem niedrigsiedenden Alkohol, wie Methanol, abgetrennt werden.

Zur Überführung in eine feinteilige, transparent färbende Pigmentform kann das erhaltene trockene Rohpigment nach üblichen Mahlverfahren, beispielsweise in einer Schwing- oder Rollmühle, in Gegenwart von Mahlhilfsmitteln gemahlen werden. Als Mahlkörper dienen hierbei im allgemeinen Stahl- oder Korundkugeln oder Stahl- oder Korundcylpebs. Mahlhilfsmittel können wasserlösliche Salze, wie Natriumsulfat, Aluminiumsulfat oder Natriumchlorid sein, die nach beendeter Mahlung in bekannter Weise durch wäßrigen Salzauszug vom Pigment abgetrennt werden.

Mischkristallpigmente der Perylentetracarbonsäurediimidreihe sind bereits bekannt. In der US-PS 3 554776 worden Pigmente, bestehend aus einer festen Lösung von mindestens zwei Perylentetracarbonsäurediimiden beansprucht. Bei den diesen Pigmenten zugrunde liegenden Verbindungen handelt es sich um symmetrische N,N'-substituierte Perylentetracarbonsäurediimide. Demgegenüber unterscheiden sich die erfindungsgemäßen Mischkristalle, bei denen die eine Komponente der genannten Formel (4) ein definiertes asymmetrisch substituiertes Diimid darstellt, durch ihre andersartige chemische Zusammensetzung.

Entsprechendes gilt auch für die aus der DE-OS 2 009 073 (Canadische Patentschrift 912 757) bekanntgewordenen festen Lösungen von Perylentetracarbonsäurediimid-Pigmenten. Auch bei diesen Pigmenten handelt es sich um Mischungen, die aus symmetrisch N,N'-substituierten Perylentetracarbonsäurediimiden zusammengesetzt sind.

Die neuen erfindungsgemäß erhältlichen Mischkristallpigmente eignen sich zum Einfärben von Lacken, Kunststoffen, wie Polyvinylchlorid, Polystyrol, Polyamid, und besonders vorteilhaft zum Pigmentieren von hochschmelzenden Polymeren, wie Polyethylen und Polypropylen, sowie für die Spinnfärbung von Polypropylen. Sie weisen gegenüber dem beispielsweise gemäß der DE-PS 1 067 157 erhältlichen Perylenpigment der genannten Formel (1) bei gleicher Kristallmodifikation - nach entsprechender Überführung in eine feinteilige, transparent färbende Pigmentform - in hochschmelzenden organischen Polymeren, insbesondere in Polyolefinen, bei mindestens ebenbürtiger Farbstärke und gelberem Farbton eine deutlich höhere Hitzestabilität auf.

Den aus der DE-AS 2 832 761 (US-PS 4 262 851) und EP-PS 042 819 (US-PS 4 404 386) bekannten, deckend färbenden Pigmentformen des Bisxylidids der genannten Formel (1) sind sie bei wesentlich gelberem, reinerem Farbton in der Farbstärke überlegen.

In den nachfolgenden Beispielen beziehen sich die Prozentangaben, sofern nicht anders vermerkt, auf das Gewicht.

Die Röntgenbeugungsdiagramme wurden mit einem Guinier Zählrohr-Diffraktometer der Firma Huber mit Kupfer-$K_{\alpha 1}$-Strahlung angefertigt.

Beispiel 1

35,3 g Perylentetracarbonsäuredianhydrid und 3,9 g Perylentetracarbonsäuremonoanhydrid-monoimid werden in Gegenwart von 2,7 g wasserfreiem Zinkchlorid in einem Gemisch von 420 g 3,5-Dimethylanilin/Chinolin (Gewichtsverhältnis 1:1) 7 Stunden bei 180 °C unter kontinuierlichem Abdestillieren des Reaktionswasser umgesetzt. Das einheitlich kristallisierte Reaktionsprodukt der α-Kristallmodifikation (vgl. FIGUR 2 im Anhang) wird abgesaugt, mit Ethanol und 2 %iger Salzsäure, dann mit 2 %iger Kalilauge bis zum farblosen Filtratablauf, schließlich mit Wasser neutral gewaschen und getrocknet.

Gewonnen werden 58,3 g eines Mischkondensationsprodukts bestehend aus ca. 90 Molprozent der Komponente der Formel (1) und ca. 10 Molprozent der Komponente der Formel (2) (mit R = H), was einer Ausbeute von ≙ 99,2 % der Theorie entspricht.

Zur Überführung in eine feinteilige Pigmentform werden 30 g Mischkondensationsprodukt mit 150 g Natriumsulfat wasserfrei in einem 1 l Kunststoffmahlbehälter mit 1400 g Korundkugeln (Durchmesser 12 mm) auf einem Vibratom-Schwingtisch 6 Stunden vermahlen und das Mahlgut nach einem wäßrigen Salzauszug getrocknet und in einer IK-Schlagkreuzmühle (der Firma JANKE und KUNKEL) aufgemahlen. (In gleicher Weise werden auch die nach den folgenden Beispielen erhaltenen Produkte zerkleinert.)

Beispiel 2

Setzt man anstelle von 3,9 g des Monoanhydrid-Monoimids 4,1 g Perylentetracarbonsäuremonoanhydridmonomethylimid ein und verfährt im übrigen wie in Beispiel 1 beschrieben, so erhält man 58,3 eines einheitlich kristallisierten Mischkondensationsprodukts in der α-Modifikation (vgl. FIGUR 3 im Anhang), was einer Ausbeute von 99,0 % der Theorie entspricht.

Das so erhaltene Produkt besteht aus ca. 90 Molprozent der Komponente der Formel (1) und ca. 10 Molprozent der Komponente der Formel (2) (mit R = $-CH_3$).

Beispiel 3

Eine Suspension von 35,3 g Perylentetracarbonsäuredianhydrid, 2,0 g Perylentetracarbonsäuremonoanhydridmonoimid und 2,0 g Perylentetracarbonsäuremonoanhydridmonomethylimid in 250 g 3,5-Dimethylanilin wird in Gegenwart von 4,0 g kristallisiertem Zinkacetat 6 Stunden bei 180 °C umgesetzt. Nach Verdünnen der Reaktionsmischung mit 300 ml Methanol wird, wie in Beispiel 1 beschrieben, aufgearbeitet.

Gewonnen werden 58,3 eines einheitlich kristallisierten Mischkondensationsprodukts der α-Modifikation, bestehend aus ca. 90 Molprozent der Komponente der Formel (1) und je ca. 5 Molprozent der Komponente der Formel (2) (mit R = H bzw. $-CH_3$), was einer Ausbeute von 99,1 % der Theorie entspricht.

Beispiel 4 (Vergleichsbeispiel)

62,0 g Perylentetracarbonsäuredianhydrid werden in 210 g 3,5-Dimethylanilin in Gegenwart von 3,2 g wasserfreiem Zinkchlorid, 8 Stunden bei 185 °C gerührt und das entstandene Bisxylidid der Formel (1) in der in Beispiel 1 beschriebenen Weise isoliert. Die Ausbeute beträgt 92,5 g (97,9 % der Theorie). Die Reflexionswinkel im Röntgenbeugungsdiagramm (vgl. FIGUR 1 im Anhang) stimmen mit den aus der weiter oben genannten japanischen Patentanmeldung bekanntgewordenen Winkeldaten der als α-Modifikation bezeichneten Kristallphase dieser Verbindung überein.

Bestimmung der Hitzebeständigkeit gemäß Prüfung DIN 53772-A

0,75 g des zu prüfungen Pigments und 500 g Polyethylen ((R)Hostalen GC 7260 Pulver) werden in einem Collin-Schnellmischer bei Raumtemperatur 1 Minute bei 2000 Umdrehungen pro Minute gemischt. Nach Zugabe von 7,14 g (R)Remafin-Weiß RCL-AE 30 (≙ 1 % $TiO_2$) wird die Mischung auf einem Extruder (Weber ET 20) in 2 Passagen bei 180 °C extrudiert. Das erhaltene Granulat wird anschließend auf einer Spritzgießmaschine (Aarburg Allrounder 221 E/170 P) bei Prüftemperaturen von 200 - 300 °C in Intervallen von jeweils 20 °C und einer Verweildauer von 5 Minuten zu Platten verspritzt.

Ergebnisse (Standardfarbtiefe 1/3 nach DIN 53235)

| Beispiel | Hitzebeständigkeit (Farbabstand $\Delta E^*_{ab} = 3$) | Bunttonwinkel (DIN 6174) |
|---|---|---|
| 1 | > 300°C | 24,3° |
| 2 | > 300°C | 24,9° |
| 3 | 300°C | 24,1° |
| 4 (Vergleich) | 270°C | 23,3° |

## Ansprüche

1. Perylentetracarbonsäurediimid-Mischkristallpigmente im Kristallgitter der α-Modifikation des Perylentetracarbonsäure-bis-3',5'-dimethylphenylimids der Formel (1), bestehend aus 98 - 70 Molprozent des symmetrischen Diimids der Formel (1) und entsprechend 2 - 30 Molprozent mindestens eines asymmetrischen Diimids der Formel (2)

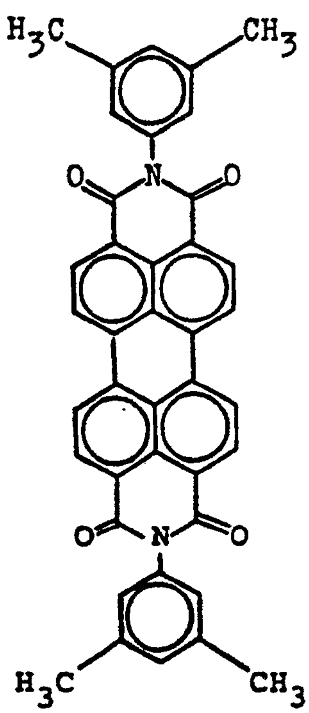

(1)

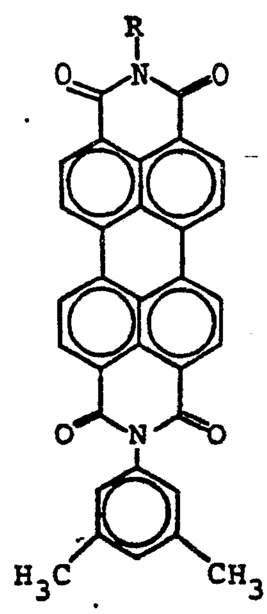

(2)

in welcher R ein Wasserstoffatom oder eine Methylgruppe bedeutet.

2. Perylentetracarbonsäurediimid-Mischkristallpigmente nach Anspruch 1, bestehend aus 95 - 85 Molprozent des symmetrischen Diimids der Formel (1) und entsprechend 5 bis 15 Molprozent mindestens eines asymmetrischen Diimids der Formel (2).

3. Verfahren zur Herstellung von Perylentetracarbonsäurediimid-Mischkristallpigmenten im Kristallgitter der α-Modifikation des Perylentetracarbonsäure-bis-3',5'-dimethylphenylimids der Formel (1), bestehend aus 98 - 70 Molprozent des symmetrischen Diimids der Formel (1) und entsprechend 2 - 30 Molprozent mindestens eines asymmetrischen Diimids der Formel (2)

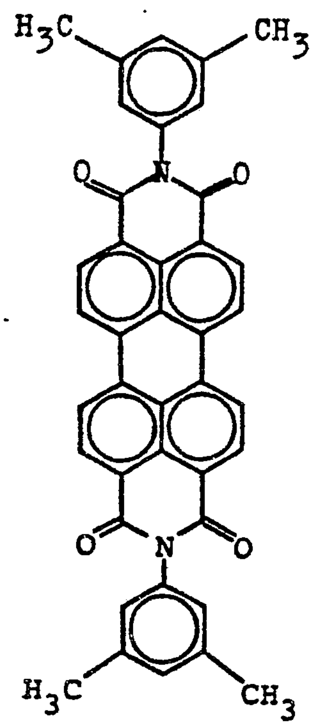

(1)

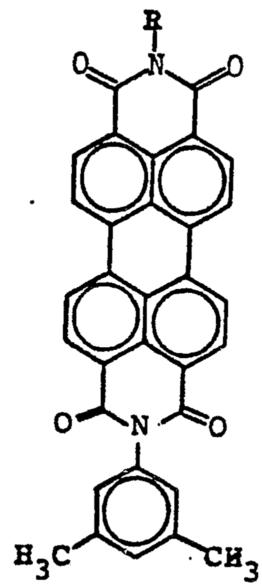

(2)

in welcher R ein Wasserstoffatom oder eine Methylgruppe bedeutet, dadurch gekennzeichnet, daß man ein Gemisch aus 98-70 Molprozent Perylentetracarbonsäuredianhydrid und entsprechend 2-30 Molprozent mindestens eines Perylentetracarbonsäuremonoanhydrids der Formel (4)

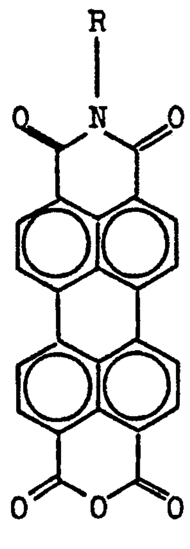

(4)

in welcher R die vorstehend genannte Bedeutung hat, mit der mindestens stöchiometrischen Menge von 3,5-Dimethylanilin in an sich bekannter Weise kondensiert.

**4.** Verwendung der in Anspruch 1 genannten Perylentetracarbonsäurediimid-Mischkristallpigmente zum Färben von organischen Polymeren.

## Claims

**1.** A perylenetetracarbimide mix-crystal pigment in the crystal lattice of the α-modification of N,N'-bis-3',5'-dimethylphenylperylenetetracarbimide of the formula (1) consisting of 98-70 mole percent of the symmetrical diimide of the formula (1) and correspondingly 2-30 mole percent of at least one asymmetrical diimide of the formula (2)

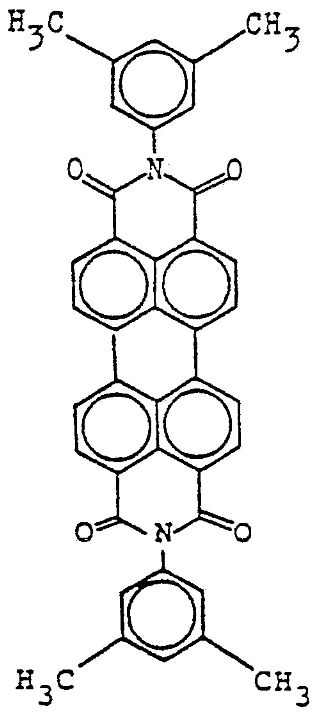

(1)

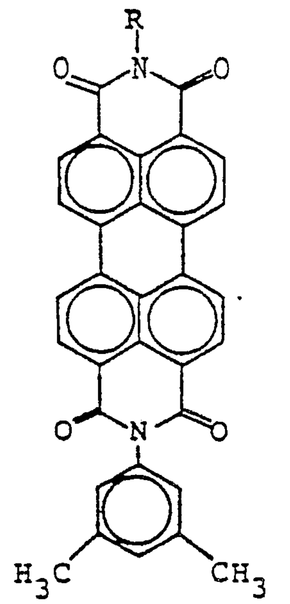

(2)

in which R denotes a hydrogen atom or a methyl group.

2. The perylenetetracarbimide mix-crystal pigment as claimed in claim 1 consisting of 95-85 mole percent of the symmetrical diimide of the formula (1) and correspondingly 5 to 15 mole percent of at least one asymmetrical diimide of the formula (2).

3. A process for preparing perylenetetracarbimide mix-crystal pigments in the crystal lattice of the α-modification of N,N'-bis-3',5'-dimethylphenylperylenetetracarbimide of the formula (1) consisting of 98-70 mole percent of the symmetrical diimide of the formula (1) and correspondingly 2-30 mole percent of at least one asymmetrical diimide of the formula (2)

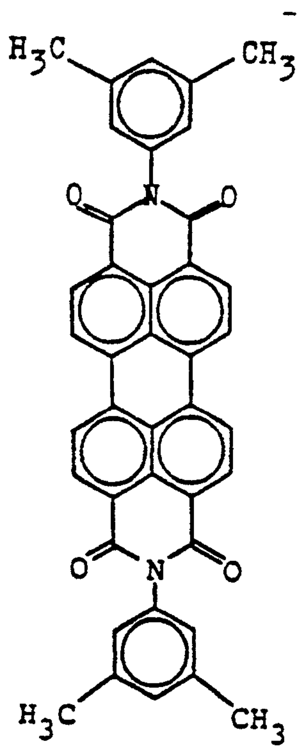

(1)

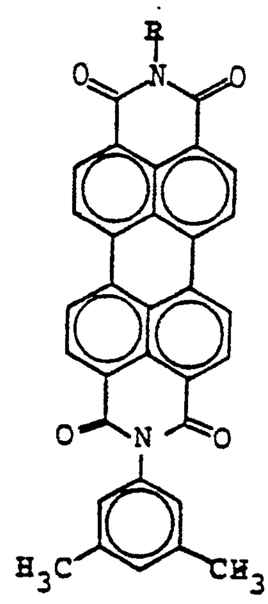

(2)

in which R denotes a hydrogen atom or a methyl group, which comprises condensing a mixture of 98-70 mole percent of perylenetetracarboxylic dianhydride and correspondingly 2-30 mole percent of at least one perylenetetracarboxylic monoanhydride of the formula (4)

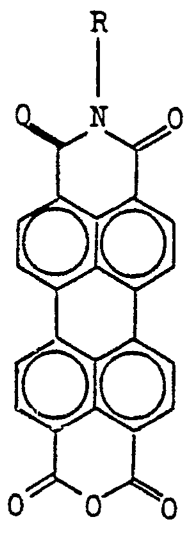

in which R has the abovementioned denotation, with an at least stoichiometric amount of 3,5-dimethylaniline in a manner known per se.

4. Use of the perylenetetracarbimide mix-crystal pigment mentioned in claim 1 for coloring organic polymers.

**Revendications**

1. Pigments en cristaux mixtes à base de di-imides de l'acide pérylène-tétracarboxylique dans le réseau cristallin de la modification α du bis-(diméthyl-3,5 phényl)-imide de l'acide pérylène-tétracarboxylique de formule 1, pigments constitués de 98 à 70 % en moles du di-imide symétrique de formule 1 et, en complément, de 2 à 30 % en moles d'au moins un di-imide asymétrique de formule 2 :

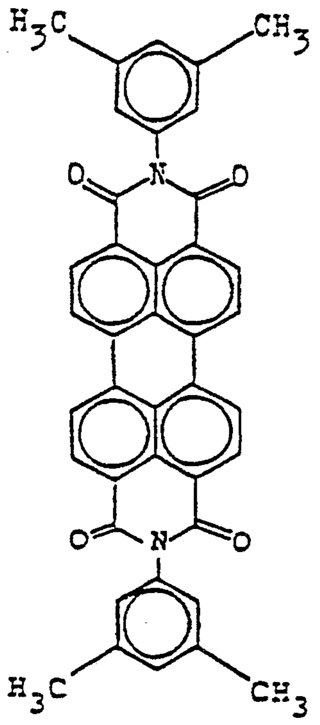

(1)

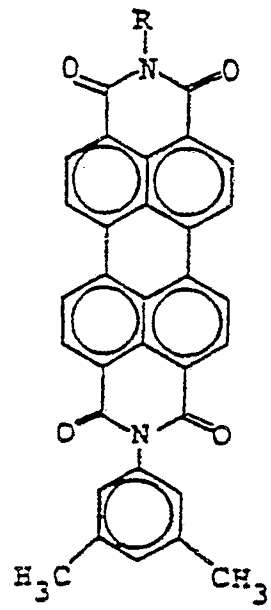

(2),

où R désigne un atome d'hydrogène ou un radical méthyle

2. Pigments en cristaux mixtes à base de di-imides de l'acide pérylène-tétracarboxylique selon la revendication 1, pigments constitués de 95 à 85 % en moles du di-imide symétrique de formule 1 et, en complément de 5 à 15 % en moles d'au moins un di-imide asymétrique de formule 2.

3. Procédé pour préparer des pigments en cristaux mixtes à base de di-imides de l'acide pérylène-tétracarboxylique dans le réseau cristallin de la modification α du bis-(diméthyl-3,5 phényl)-imide de l'acide pérylène-tétracarboxylique de formule 1, pigments constitués de 98 à 70 % en moles du di-imide symétrique de formule 1 et, en complément, de 2 à 30 % en moles d'au moins un di-imide asymétrique de formule 2 :

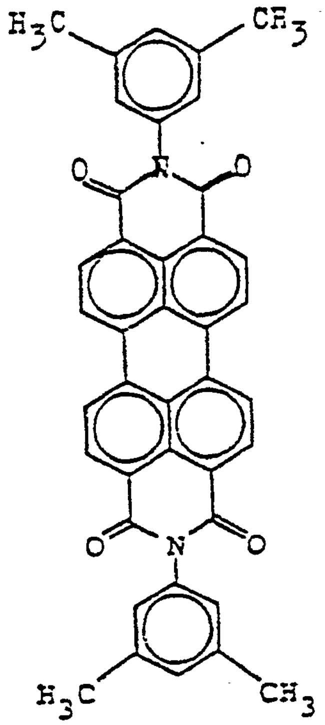

(1)

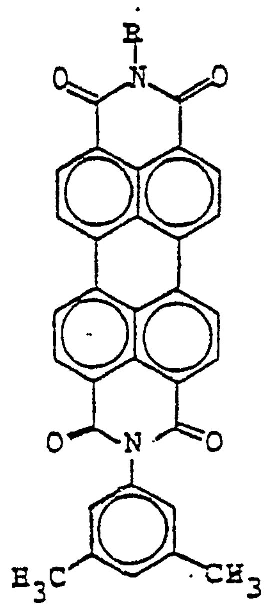

(2),

où R désigne un atome d'hydrogène ou un radical méthyle, procédé caractérisé en ce qu'on condense de manière connue un mélange de 98 à 70 % en moles du dianhydride de l'acide pérylène-tétracarboxylique et, en complément, de 2 à 30 % en moles d'au moins un mono-anhydride de l'acide pérylènetétracarboxylique répondant à la formule 4 :

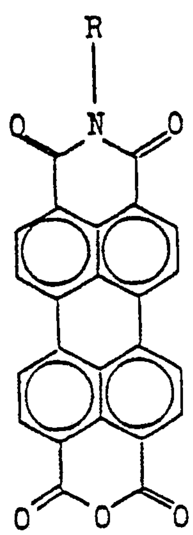

(4)

dans laquelle R a la signification qui lui a été donnée cidessus, avec une quantité au moins égale à la quantité stoechiométrique de diméthyl-3,5 aniline.

**4.** Application des pigments en cristaux mixtes à base de di-imides de l'acide pérylène-tétracarboxylique qui ont été mentionnés à la revendication 1, à la teinture de polymères organiques.

1/3

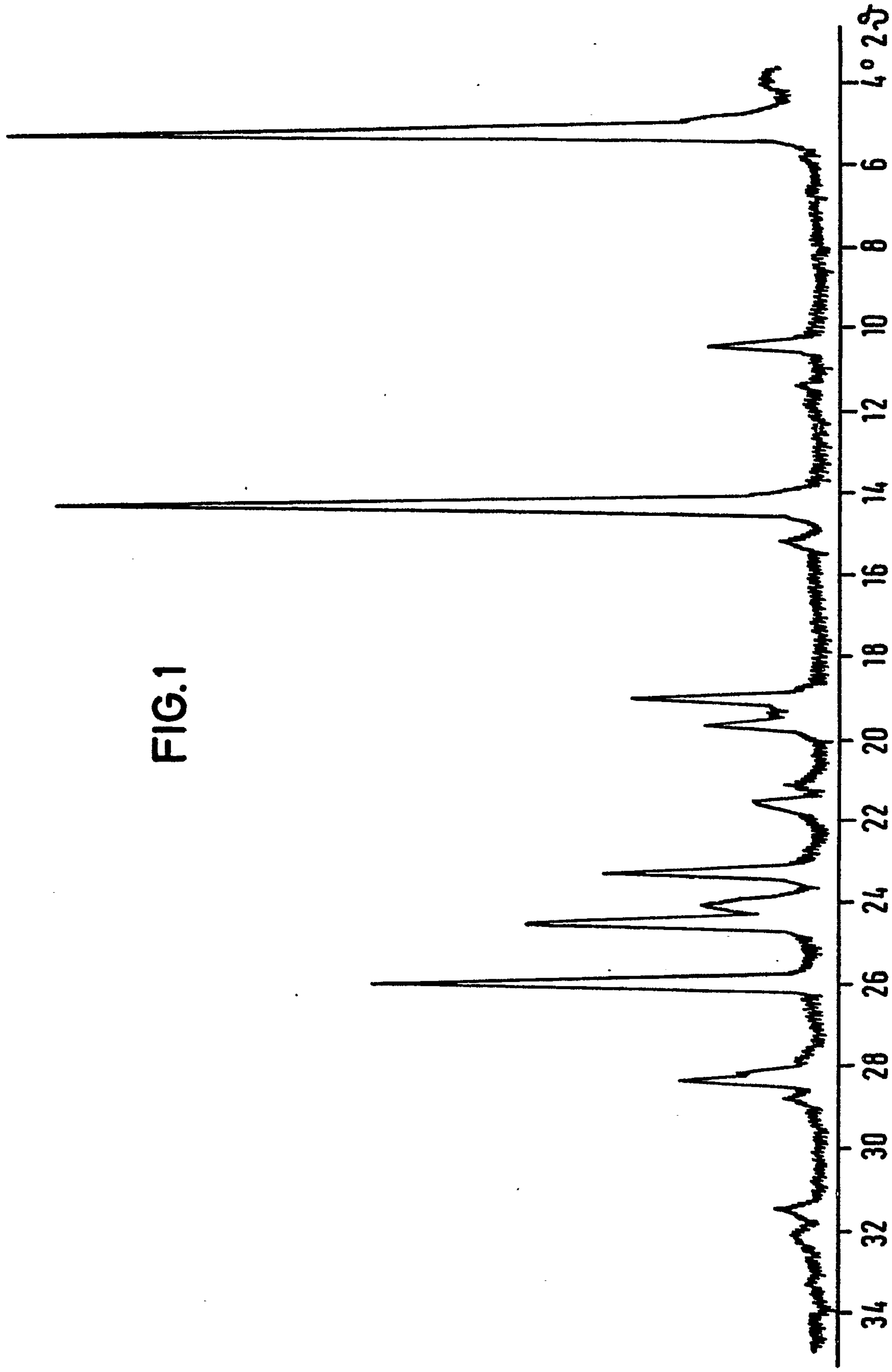


FIG.1

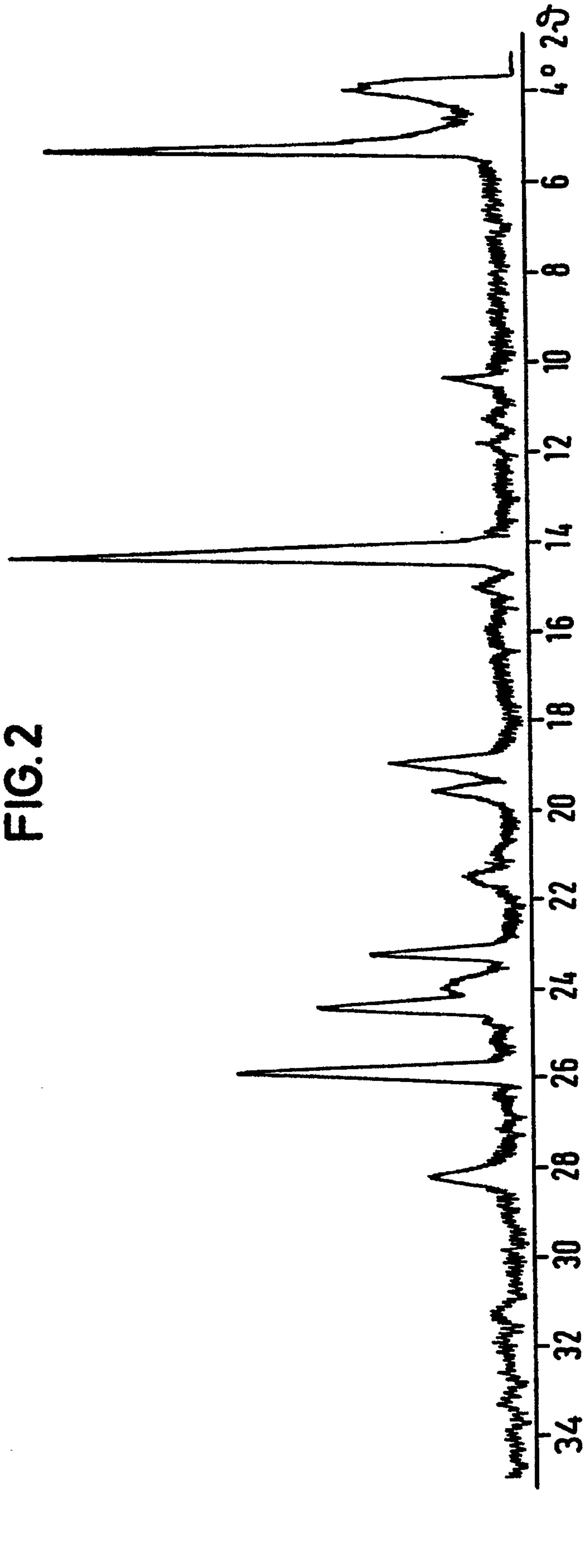


FIG.2

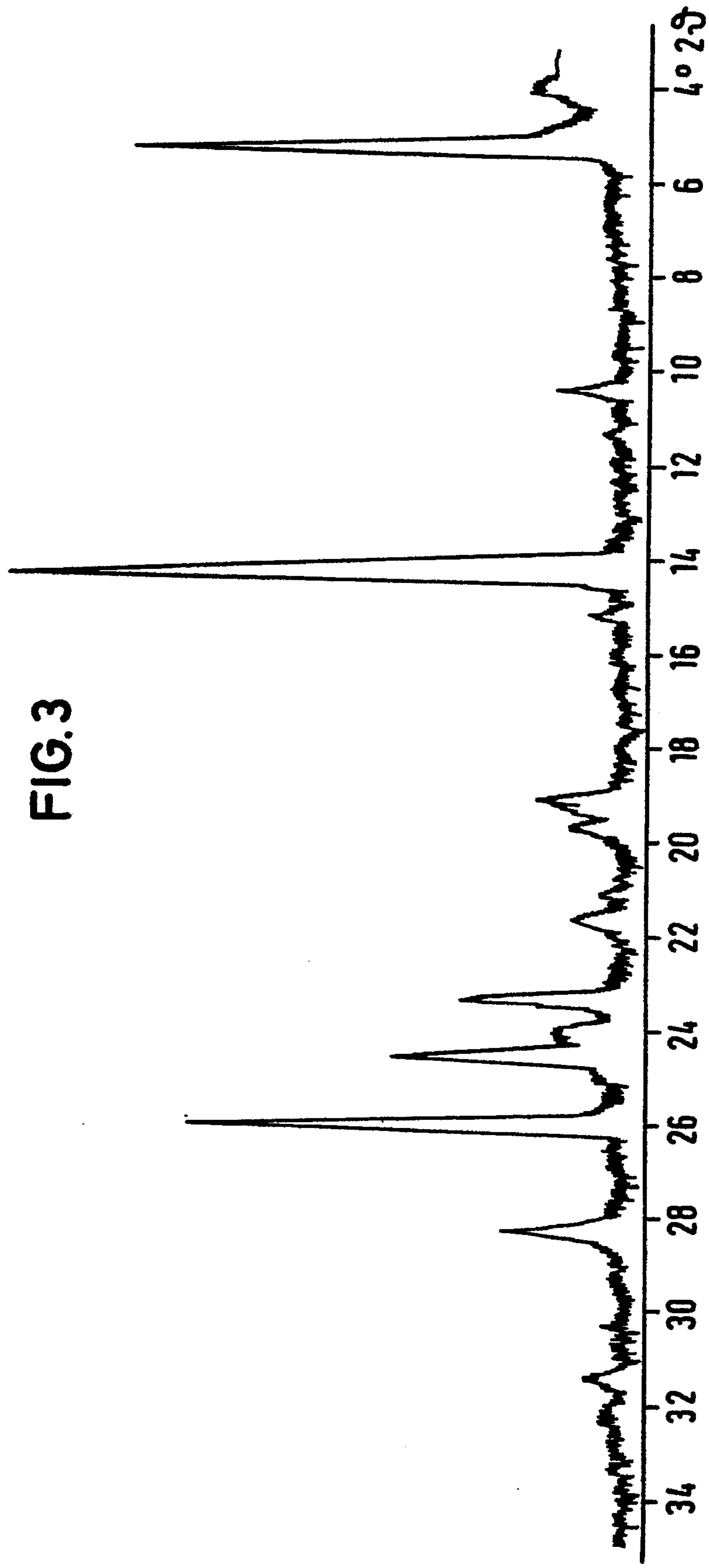


FIG.3